# EUROPEAN PATENT APPLICATION

(11) **EP 4 507 414 A1**
(43) Date of publication of application: **12.02.2025**
(21) Application number: 24190287.3
(22) Date of filing: 23.07.2024
(51) Int. Cl.: H04W 64/00, H04W 8/00, H04W 92/18, H04W 88/02, H04W 88/08

(54) **SIDELINK POSITIONING**

(30) Priority: 10.08.2023 GB 202312257
(71) Applicant: Nokia Technologies Oy, 02610 Espoo (FI)
(72) Inventor: KAKKAVAS, Anastasios, Munich (DE); SAHIN, Taylan, Munich (DE); MICHALOPOULOS, Diomidis, Munich (DE); KEATING, Ryan, Chicago - IL (US); SÄILY, Mikko, Laukkoski (FI); KESHAVAMURTHY, Prajwal, Munich (DE); WILDSCHEK, Torsten, Gloucester (GB); KUCERA, Stepan, Munich (DE); SHIMIZU, Takayuki, Mountain View - CA (US); ARZELIER, Claude, Molieres-sur-Ceze (FR); SUNELL, Kai-Erik, Naantali (FI)
(74) Representative: Script Intellectual Property LLP

(57) **Abstract**

There is herein provided a method. The method includes maintaining capability information for a first sidelink positioning session supported by a second apparatus and receiving, at the apparatus from the second apparatus, a response message, the response message being a response to a discovery message, and the discovery message being a request for a second sidelink positioning session for positioning a third apparatus. The method includes determining that the second apparatus is available for supporting the second sidelink positioning session and transmitting, from the first apparatus, a selection message indicating that the second apparatus has been selected for involvement in the second sidelink positioning session

## Description

### Field

Example embodiments relate to apparatus, systems, methods and/or computer programs for positioning. In particular, example embodiments relate to sidelink positioning.

### Background

Communication systems enable communication between two or more nodes or devices, such as fixed or mobile communication devices. Signals can be carried on wireless carriers.

An example of a cellular communication system is an architecture that is being standardized by the 3rd Generation Partnership Project (3GPP). There has been development in this field often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations, network nodes or access points, which are referred to as enhanced Node AP or Evolved Node B (eNBs), provide wireless access within a coverage area or cell. In LTE, mobile devices, or mobile stations are referred to as user equipments (UE). LTE has included a number of improvements or developments.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT), and may offer new types of mission-critical services. Ultra-reliable and low-latency communications (URLLC) devices may require high reliability and very low latency.

In a telecommunications network, the frameworks for downlink (i.e., signals are forwarded from a base station to a user equipment (UE)) and uplink transmissions (i.e., signals are forwarded from a UE to a base station) are widely deployed. In the context of these frameworks, physical signals transmitted from/to UEs are relayed by network base stations. In contrast, sidelink (SL) transmissions enable direct communications between two UEs without signal relay through a base station. Such transmissions may be used for, e.g., public safety, vehicle-to-everything (V2X) services, Proximity Services (ProSe), sidelink relaying services, device-to-device (D2D) communications, etc. Sidelink transmissions continue to be of interest in 3GPP New Radio (NR), enabling low latency, high reliability and high throughput services.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for maintaining capability information for a first sidelink positioning session supported by a second apparatus. The apparatus further comprises means for receiving, at the apparatus from the second apparatus, a response message, the response message being a response to a discovery message, and the discovery message being a request for a second sidelink positioning session for positioning a third apparatus. The apparatus further comprises means for determining that the second apparatus is available for supporting the second sidelink positioning session. The apparatus further comprises means for transmitting, from the first apparatus, a selection message indicating that the second apparatus has been selected for involvement in the second sidelink positioning session.

In some embodiments, the response message comprises status information regarding the availability of the second apparatus for supporting the second sidelink positioning session. The status information may comprise at least one of: access stratum information ;power available to transmit sidelink positioning signals; quality of service information; or mobility information.

In some embodiments, the means for determining that the second apparatus is available for supporting the second sidelink positioning session, is based on the status information received in the response message.

In some embodiments, the means for determining that the second apparatus is available for supporting the second sidelink positioning session, is based on capability information regarding the second apparatus maintained by the apparatus.

In some embodiments, the apparatus further comprises means for transmitting, from the apparatus to a fourth apparatus, the selection message; wherein the fourth apparatus is in a sidelink positioning session with the third apparatus.

In some embodiments, the apparatus further comprises receiving, at the apparatus from the third apparatus or the fourth apparatus, a discovery message.

In some embodiments, the selection message further comprises assistance data for the second sidelink positioning session, the assistance data comprising a sidelink positioning session configuration for the second apparatus and the third apparatus based on at least one of: a quality-of-service requirement of the third apparatus or information provided in the response message.

In some embodiments the apparatus further comprises means for performing configuring a new sidelink positioning session for positioning the third apparatus supported by the apparatus or, alternatively, incorporating the third apparatus into an existing sidelink positioning session that is supported by the apparatus.

According to a first aspect, there is described an apparatus comprising means for participating in a positioning session with a second apparatus. The apparatus further comprises means for receiving, at the apparatus from a third apparatus, a discovery message for a request for a sidelink positioning session to support the positioning of the third apparatus. The apparatus further comprises means for transmitting, from the apparatus to the second apparatus, a response message to the discovery message.

In some embodiments, the apparatus further comprises means for receiving, at the apparatus from the second apparatus, a selection message indicating that the apparatus has been selected for involvement in the sidelink positioning session for the third apparatus.

In some embodiments the apparatus further comprises means for determining whether to transmit the response message based on status information regarding the availability of the apparatus for supporting the sidelink positioning session of the third apparatus, the status information comprising at least one of: access stratum information; power available to transmit sidelink positioning signals; quality of service information; or mobility information. The response message comprises the status information.

According to a third aspect, there is described an apparatus comprising means for transmitting, from the apparatus to a second apparatus, a discovery message for a request for a sidelink positioning session to support the positioning of the apparatus. The apparatus may comprise means for receiving, from a third apparatus at the apparatus, a selection message indicating that the second apparatus has been selected for involvement in the sidelink positioning session for the apparatus.

In some embodiments, the apparatus may further comprise means for participating in a positioning session with a fourth apparatus;

In some embodiments, according to the first, second or third aspect, the discovery message is a broadcast signal and/or wherein the discovery message comprises an indication of the capabilities of the third apparatus.

In some embodiments, according to the first, second or third aspect, at least one apparatus comprises a user equipment.

In some embodiments, according to the first, second or third aspect, at least one apparatus comprises: at least one processor; and at least one memory storing instructions that, when executed by the at least processor, cause the performance of the apparatus.

According to a fourth aspect, there is described a method comprising: at a first apparatus, maintaining capability information for a first sidelink positioning session supported by a second apparatus. The method further comprises receiving, at the first apparatus from the second apparatus, a response message, the response message being a response to a discovery message, and the discovery message being a request for a second sidelink positioning session for positioning a third apparatus. The method further comprises determining that the second apparatus is available for supporting the second sidelink positioning session. The method further comprises transmitting, from the first apparatus, a selection message indicating that the second apparatus has been selected for involvement in the second sidelink positioning session.

According to a fifth aspect, there is described a method comprising participating, by a first apparatus, in a positioning session with a second apparatus and receiving, at the first apparatus from a third apparatus, a discovery message for a request for a sidelink positioning session to support the positioning of the third apparatus, and transmitting, from the first apparatus to the second apparatus, a response message to the discovery message.

According to a sixth aspect, there is described a method comprising transmitting, from a first apparatus to a second apparatus, a discovery message for a request for a sidelink positioning session to support the positioning of the first apparatus, and receiving, from a third apparatus at the first apparatus, a selection message indicating that the second apparatus has been selected for involvement in the sidelink positioning session for the apparatus.

According to a seventh aspect, there is provided a computer program product comprising a set of instructions which, when executed on an apparatus, is configured to cause the apparatus to carry out the method of any preceding method definition.

According to an eight aspect, there is provided a non-transitory computer readable medium comprising program instructions stored thereon for performing a method of any preceding method definition.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

### Brief Description of the Drawings

Example embodiments will now be described by way of non-limiting examples, with reference to the accompanying drawings, in which:
Fig. 1 shows, by way of example, a network architecture of a communication system;
Fig. 2 shows, by way of example, a network architecture of a sidelink positioning session;
Fig. 3 shows, by way of example, a flowchart of a method;
Fig. 4 shows, by way of example, a flowchart of a method;
Fig. 5 shows, by way of example, a flowchart of a method;
Fig. 6 shows, by way of example, a flowchart of a decision-making process; and
Fig. 7 shows, by way of example, a block diagram of an apparatus.

### Detailed Description

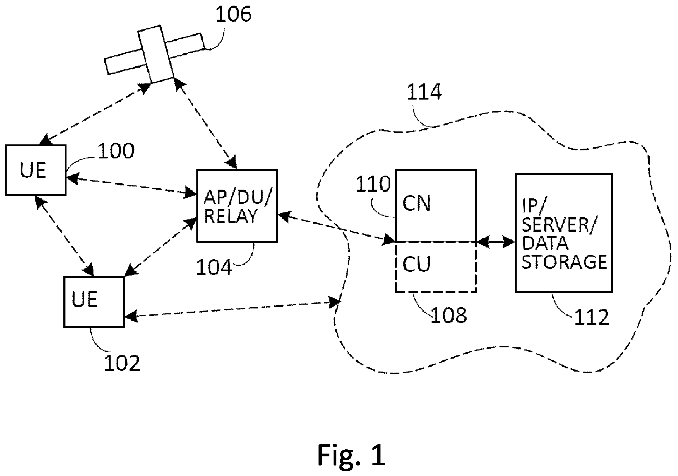

Fig. 1 shows, by way of an example, a network architecture of a communication system which is a radio access network (RAN). In the following, different exemplifying embodiments will be described using, as an example of an access architecture to which embodiments may be applied, a radio access architecture based on long term evolution advanced (LTE Advanced, LTE-A) or new radio (NR), also known as fifth generation (5G), without restricting the embodiments to such an architecture, however. Embodiments may also be applied to other kinds of communications networks having suitable means by adjusting parameters and procedures appropriately. Some examples of other options for suitable systems are the universal mobile telecommunications system, radio access network, long term evolution (LTE), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

Fig. 1 shows first and second user devices 100, 102 configured to be in a wireless connection on one or more communication channels in a cell with a network node, such as a gNB 104 providing a cell. The physical link from a user device, e.g. the first user device 100, to the network node 104 is called the uplink (UL) or reverse link and the physical link from the network node to the user device is called the downlink (DL) or forward link. It should be appreciated that network nodes and their functionalities may be implemented by using any node, host, server or access point entity suitable for such a usage. A communications system typically comprises more than one network node in which case the network nodes may also be configured to communicate with one another over links, wired or wireless, designed for the purpose. These links may be used for signaling purposes. A network node is a computing device configured to control the radio resources of the communication system it is coupled to. The network node 104 may also be referred to as a radio access network (RAN) node, a transmission reception point (TRP), a base station (BS), an access point, an access node, or any other type of interfacing device including a relay station capable of operating in a wireless environment. A network node may include or is coupled to transceivers. From the transceivers of the network node 104, a connection may be provided to an antenna unit that establishes bi-directional radio links to user devices, such as the first and second user devices 100, 102. The antenna unit may comprise a plurality of antennas or antenna elements, for example arranged as an antenna array. The network node 104 may further be connected to a core network 110.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant, handset, device using a wireless modem (alarm or measurement device, etc.), laptop and/or touch screen computer, tablet, game console, notebook, a vehicle, fixed wireless access (FWA) and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

5G enables using multiple input and multiple output technology at both the UE and gNB side, many more base stations or nodes than the LTE. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

An edge cloud may be brought into RAN. Using an edge cloud may mean access node operations to be carried out, at least partly, in a server, host or node operationally coupled to a remote radio head or base station comprising radio parts. It is also possible that node operations will be distributed among a plurality of servers, nodes or hosts. Applications of cloud RAN architecture enables RAN real time functions being carried out at the RAN side (in a distributed unit, DU 104) and non-real time functions being carried out in a centralized manner (in a centralized unit, CU 108).

Sidelink communication may be understood as communication between terminal devices in which the terminal devices connect to each other directly without RAN involvement, in other words, without directly relaying the data via a network such as a cellular communication network. Such terminal devices may be of any suitable type such as mobile phones, vehicles, robots or wearable consumer electronic devices. Sidelink communication may be enabled by 5G and/or 4G technology. Sidelink communication may be beneficial for example to allow devices with close proximity to each other to discover and connect to each other at high data rates and low latency. This may be useful for example in peer-to-peer gaming, vehicle platooning, etc. Also enhanced augmented reality and/or virtual reality may benefit from sidelink communication. Sidelink communication can be used to obtain absolute position, relative position, or ranging information.

In sidelink communication, resource allocations as well as link adaptation may be controlled by the terminal devices independently, which allows more control over usage of its resources to a terminal device. As sidelink communication allows reduction in latency due to being restricted to one hop, it may be useful for example in mission-critical industrial applications.

As described above, a terminal device participating in sidelink communication participates in managing its sidelink resource allocation and/or sidelink resource selection as well. Therefore, if a transmitter 'Tx' terminal device is to periodically transmit transmissions for a service to a receiver 'Rx' terminal device, traffic pattern and characteristics of the traffic are to be taken into account in periodic resource allocation or periodic resource selection. Examples of traffic pattern and characteristics comprise for example generation time of data, its periodicity, size and quality of service requirement. If the Rx terminal device receives from the Tx terminal device Sidelink Control Information (SCI) indicating and reserving future transmission resources, it is then aware of the transmissions that are to take place and may monitor resources correspondingly to be able to receive the transmissions from the Tx terminal device. Alternatively, the Rx terminal device may receive an indication indicative of one or more sidelink resources from the Tx terminal device and based on that indication, the Rx terminal device may reserve the one or more sidelink resources for future transmissions from the Tx terminal device.

It is to be noted that the future transmissions may be considered as subsequent or expected transmissions as well. The transmissions over the indicated/reserved resources may be used for periodic transmissions and/or re-transmissions. This allows the Rx terminal device to limit monitoring of sidelink transmissions to the resources indicated in the SCI which allows its power to be saved.

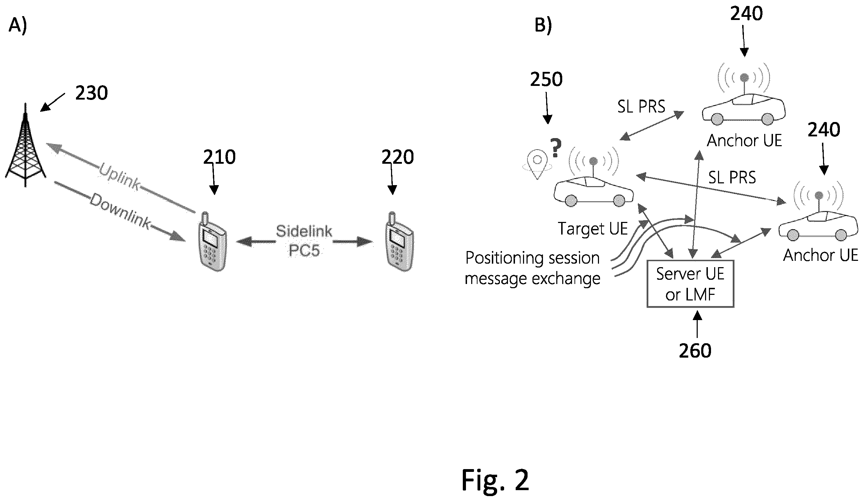

Fig. 2A illustrates an exemplary embodiment of sidelink communication between terminal devices 210 and 220. In this exemplary embodiment the first terminal device 210 and second terminal device 220 are mobile phones, but other terminal devices and/or network infrastructures could also be used. In this exemplary embodiment the second terminal device 220 sends and receives sidelink transmissions of data from the first terminal device 210.

SL positioning is used to support use cases such as vehicle-to-everything (V2X), public safety, commercial and industrial-internet-of-things (IIoT). Typically, positioning requirements are captured via key-performance-indices such as:
- horizontal and vertical accuracy, where vertical accuracy refers to accuracy in altitude and determines the floor for indoor use cases and to distinguish between superposed tracks for road and rail use cases (e.g. bridges).
- positioning service availability: percentage value of the amount of time the positioning service is delivering the required position-related data within the performance requirements, divided by the amount of time the system is expected to deliver the positioning service according to the specification in the targeted service area.
- positioning service latency: time elapsed between the event that triggers the determination of the position-related data and the availability of the position-related data at the system interface.
- time to first fix (TTFF): time elapsed between the event triggering for the first time the determination of the position-related data and the availability of the position-related data at the positioning system interface.
- Update rate
- Energy consumption, etc.

The present disclosure aims to improve these key-performance-indices for SL positioning.

Fig. 2B illustrates an exemplary embodiment of sidelink communication between anchor user equipment's (UE) 240 and target UE 250. A target UE 250 is a UE to be positioned, in this instance using sidelink positioning. An anchor UE is a UE for supporting positioning of the target UE, e.g., by transmitting and/or receiving reference signals for positioning over SL interface. Fig. 2B shows an example sidelink positioning session wherein two anchor UEs 240 are used to support the positioning of the target UE 250. The position of the target UE 250 is unknown and to be estimated, and the anchor UEs 240 are the UEs that participate in sidelink positioning and help in the acquisition of the target UE 250 position, e.g., by sending/receiving Sidelink Positioning Reference Signal (SL-PRS) and doing relevant measurements. The target and anchor UEs form a sort of sidelink positioning group and send/receive SL-PRS information to calculate the target UE 250 position based on UE measurements. This procedure is similar to UL/DL-based positioning, where gNBs serving as anchors transmit/receive reference signals to/from the target UEs 250 for positioning.

A server UE 260 may also be present in the sidelink communication. The server UE 260 is a UE offering method determination, assistant data distribution and/or location calculation functionalities for Sidelink Positioning and Ranging based service. In this case, ranging may be the determination of the distance and/or the direction between a UE and another entity, e.g., anchor UE.

A Sidelink Positioning Reference Signal (SL-PRS) refers to the reference signal transmitted over SL for positioning purposes. SL-PRS (pre-)configuration is a term used to collectively refer to (pre-)configured parameters of SL-PRS such as time-frequency resources including its bandwidth and periodicity; directivity-related parameters, e.g., beam direction, beam width, number of beams; and transmit power, etc. In coverage (when target UE and all anchor UEs are in coverage) or partial coverage (when either a target UE or at least one of SL positioning anchor UEs is out of direct gNB coverage), the SL-PRS could be determined by network, e.g., by Location Management Function (LMF) or gNB, whereas when out-of-coverage the SL-PRS could be pre-configured and/or determined by UEs autonomously.

Positioning may be determined in absolute or relative terms during the sidelink positioning session. Absolute positioning refers to an estimate of the UE position in 2D/3D geographic coordinates (e.g., latitude, longitude, elevation) within a coordinate system. Relative positioning refers to an estimate position relatively to other network elements or relatively to other UEs. Additionally, the sidelink positioning session can be used to determine ranging. In this case, ranging may be a determination of the distance between two UEs and/or the direction from one UE to another one via direct device connection.

SL positioning is based on the transmissions of SL-PRS by one or more anchor UEs to be received by a target UE (or SL-PRS exchange between the anchor and target UEs) to enable localization of the target UE within precise latency and accuracy requirements of the corresponding SL positioning session. Fig. 2B illustrates a SL positioning scenario where a target UE is performing SL positioning session i.e., exchanging SL-PRS with two anchor UEs in order to determine its location. Here, the anchor UEs are said to provide sidelink positioning assistance (incl. SL-PRS transmission and/or reception) to the target UE.

The disclosure herein may relate to sidelink (SL) positioning under partial gNB coverage where either a target UE or at least one of SL positioning anchor UEs is out of direct gNB coverage. The term "partial coverage" is herein used to describe an environment wherein one of the following two UEs is out of direct gNB coverage:
- the target UE to be localized, or
- at least one of the identified anchor UEs assisting in the target UE positioning.

The disclosure herein may also relate to out of coverage scenarios, when all UEs are out of coverage or it is applicable to in-coverage scenarios, where all devices are in coverage.

The relevant scenarios include standalone SL positioning over the PC5 interface, or hybrid positioning using both Uu and PC5 interface. The target UE may calculate its own position by measuring positioning reference signals (SL-PRSs), which are emanated by other nearby UEs - so called anchor UEs, or by both anchor UEs and network elements (e.g., gNBs) in the case of hybrid positioning. Especially, in partial coverage conditions, the allocation of SL-PRS resources used for target UE positioning is not trivially administered by the network since at least one anchor UE does not have a direct connection to the network and key decision-making entries (e.g. the LMF for sidelink positioning). The target UE's position may also be calculated by the positioning server (server UE or LMF) and the SL PRS may be transmitted by the target UE and/or the anchor UEs

A significant amount of signalling between a target UE, server UE or LMF and anchor UEs is necessary to support a SL positioning task. In addition, depending on the availability of the anchor UEs, SL PRS resources and optimization of SL PRS resources, configuring a SL PRS transmission becomes a challenging task under dynamic SL channel conditions and/or target UE moving in relation to anchor UEs. Typical positioning procedures relying on traditional request/response/reject/etc. messages between the UEs and/or other network entities would incur heavy costs in terms of latency and signalling for this task. Therefore, efficient mechanisms to configure and re-configure (i.e., setup and add/modify/remove) SL positioning are necessary.

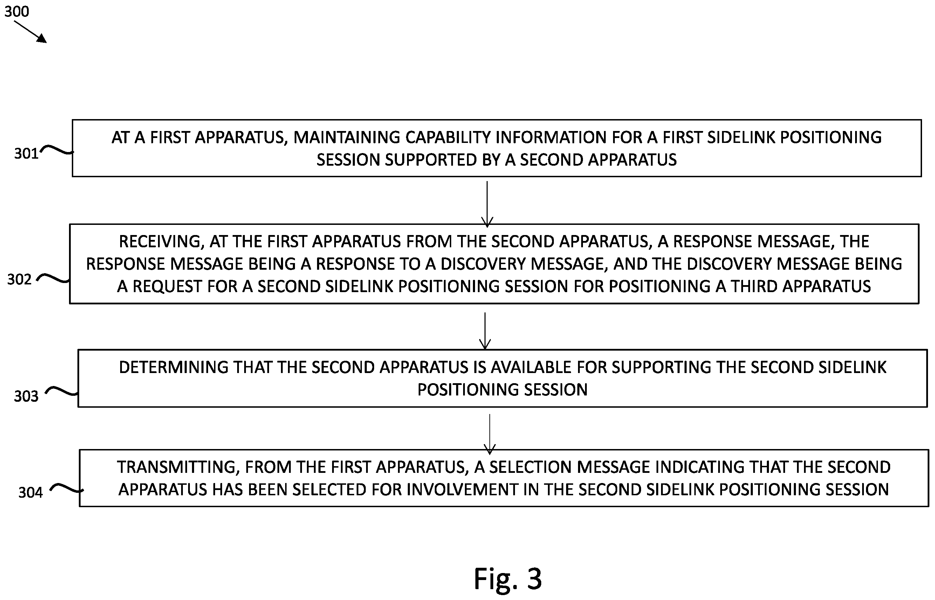

Fig. 3 shows, by way of example, a flowchart of a method 300 according to example embodiments. The method 300 shows the creation of a new sidelink positioning session based on the perspective of a server UE or location management function LMF. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 300 may comprise a first operation 301 of, at a first apparatus, maintaining capability information for a first sidelink positioning session supported by the second apparatus.

The first apparatus may be a positioning server UE that is responsible for the positioning method determination, assistant data distribution and/or location calculation functionalities for SL positioning and ranging based services. Alternatively, the first apparatus may be a location management function (LMF), e.g. forming part of a network entity. The second apparatus may be an anchor UE that is responsible for supporting the positioning of a target UE by transmitting and/or receiving reference signals for providing positioning related information over a SL interface. The positioning session may be a sidelink positioning session between the first apparatus and the second apparatus or a LPP positioning session. A positioning session comprises a set of transactions between two endpoints, with each of the transaction carrying out a specific task, e.g., capability information transfer, assistance data transfer, location information transfer.

The capability information may include information such as access stratum information, power available to transmit sidelink positioning signals, quality of service information and/or mobility information. The capability information may be stored by the first apparatus to provide information regarding availability for the first sidelink positioning session. The first sidelink positioning session may be between the second apparatus and a further apparatus that is either known or unknown by the first apparatus. The first sidelink positioning session may be managed by the first apparatus, when the first apparatus is a positioning server for the first sidelink positioning session.

The method 300 may comprise a second operation 302 of receiving, at the first apparatus from the second apparatus, a response message, the response message being a response to a discovery message, and the discovery message being a request to the second apparatus for participation in/support of a second sidelink positioning session for a third apparatus.

The third apparatus may be a target UE, which is the UE to be positioned.

In some embodiments, the discovery message may be a broadcast signal. In some embodiments, the discovery message may comprise an indication of the capabilities of the third apparatus and may also include quality of service requirements of the third apparatus. The indication of capabilities may comprise, for example, supported positioning methods, bandwidth of sidelink positioning reference signal that the device can transmit or receive and whether the device can act as (its own) server.

The response message comprises status information regarding the availability of the second apparatus for supporting the second sidelink positioning session, the status information comprising at least one of: access stratum information, power available to transmit sidelink positioning signals, quality of service information or mobility information. Access stratum information may refer to the RSRP of the discovery request (which is sent by the third apparatus and received by the second apparatus). Power available to transmit sidelink positioning signals may refer to battery-powered devices that may decide to allocate only a small fraction of their available power to the transmission of SL PRS, to save power for other tasks which may be more critical for them. Quality of service information, may be, for example, a location estimation accuracy or latency requirement. If quality of service information is present, it will be copied from the discovery request message sent by the third apparatus, provided that the quality of service information was provided there. Mobility information may refer to information about the absolute velocity of the anchor UE or the relative velocity of the anchor UE with respect to the target. This may be used by the server UE to determine whether this anchor UE is suitable for supporting the positioning of the target UE. For example, an anchor UE moving fast to the opposite direction of the target UE may not be a suitable candidate as it may soon become unreachable.

The method 300 may comprise a third operation 303 of determining that the second apparatus is available for supporting the second sidelink positioning session.

The determining that the second apparatus is available for supporting the second sidelink positioning session may be based on the status information received in the response message. Alternatively, determining that the second apparatus is available for supporting the second sidelink positioning session, may be based on capability information regarding the second apparatus maintained by the first apparatus (i.e. the capability information known from the first operation 301).

The method 300 may comprise a fourth operation 304 of transmitting, from the first apparatus, a selection message indicating that the second apparatus has been selected for involvement in the second sidelink positioning session.

In some embodiments, the selection message may further comprise assistance data for the second sidelink positioning session, the assistance data comprising a sidelink positioning session configuration for the second apparatus and the third apparatus based on at least one of: a quality-of-service requirement of the third apparatus or information provided in the response message.

Optionally, the method 300 may comprise a further operation of transmitting, from the apparatus to a fourth apparatus, the selection message. The fourth apparatus may be in a sidelink positioning session with the second apparatus and may be a server UE.

In some embodiments, the method 300 may further comprise configuring a new sidelink positioning session for positioning the third apparatus supported by the apparatus. Alternatively, in some embodiments, the method 300 may further comprise incorporating the third apparatus into an existing sidelink positioning session that is supported by the apparatus.

The method 300 may be performed by an apparatus such as the UE 100 of Fig. 1, e.g., a mobile phone or a smart phone, or by a control device configured to control the functioning thereof, when installed therein.

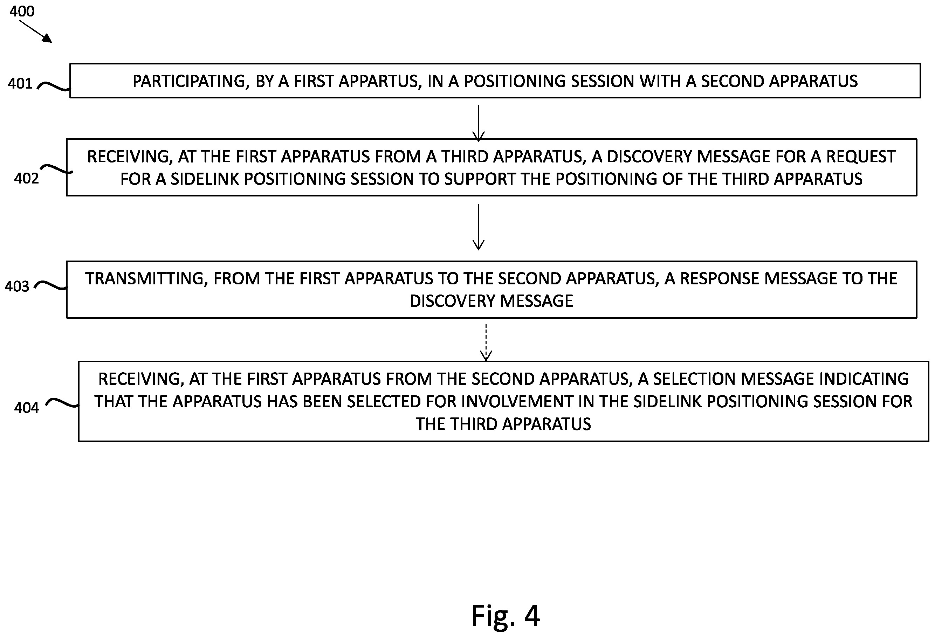

Fig. 4 shows, by way of example, a flowchart of a method 400 according to example embodiments. The method 400 shows the creation of a new sidelink positioning session based on the perspective of an anchor UE, the anchor UE being the UE which supports the positioning of another UE. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 400 may comprise a first operation 401 of participating, by a first apparatus, in a positioning session with a second apparatus.

The first apparatus may be an anchor UE that is responsible for supporting the positioning of a target UE by transmitting and/or receiving reference signals for providing positioning related information over a SL interface. The positioning session may be a sidelink positioning session between the first apparatus and the second apparatus or a LPP positioning session between the first apparatus and second apparatus. The second apparatus may be a positioning server UE that is responsible for the positioning method determination, assistant data distribution and/or location calculation functionalities for SL positioning and ranging based services. Alternatively, the second apparatus may be a location management function (LMF), e.g. forming part of a network entity. In other words, the first apparatus of method 400 may be the same as the second apparatus of method 300, and the second apparatus of method 400 may be the same as the first apparatus of method 300.

The method 400 may comprise a second operation 402 of receiving, at the apparatus from a third apparatus, a discovery message for a request for a sidelink positioning session to support the positioning of the third apparatus. The discovery message may be the same discovery message as referred to in relation to method 300. The third apparatus may be a target UE, which is the UE to be positioned.

The method 400 may comprise a third operation 403 of transmitting, from the first apparatus to the second apparatus, a response message to the discovery message. The response message may be the same as the response message as referred to in method 300.

The method 400 may, optionally (denoted by the dashed line), comprise a fourth operation 404 of receiving, at the first apparatus from the second apparatus, a selection message indicating that the apparatus has been selected for involvement in the sidelink positioning session for the third apparatus. The selection may be the same selection message as referred to in method 300.

In some embodiments, the method 400 may further comprise determining whether to transmit the response message based on status information regarding the availability of the apparatus for supporting the sidelink positioning session of the third apparatus, the status information comprising at least one of: access stratum information, power available to transmit sidelink positioning signals, quality of service information or mobility information.

The method 400 may be performed by an apparatus such as the UE 100 of Fig. 1, e.g., a mobile phone or a smart phone, or by a control device configured to control the functioning thereof, when installed therein.

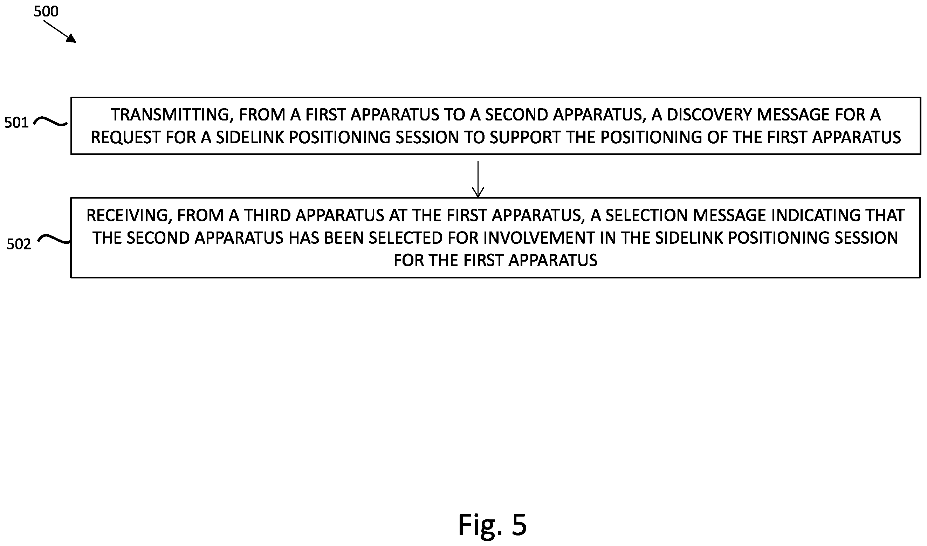

Fig. 5 shows, by way of example, a flowchart of a method 500 according to example embodiments. The method 500 shows the creation of a new sidelink positioning session based on the perspective of a target UE or a server UE that is currently in a positioning session with a target UE, the target UE being the UE to be positioned. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 500 may comprise a first operation 501 of transmitting, from a first apparatus to a second apparatus, a discovery message for a request for a sidelink positioning session to support the positioning of the first apparatus. The first apparatus may be a target UE, which is the UE to be positioned. Alternatively, the third apparatus may be a server UE, which is responsible for a current sidelink positioning session that a target UE is a part of. The second apparatus may be an anchor UE that is responsible for supporting the positioning of a target UE by transmitting and/or receiving reference signals for providing positioning related information over a SL interface. The discovery message may be same as the discovery message referred to in method 300 and method 400.

The method 500 may comprise a second operation 502 of receiving, from a third apparatus at the first apparatus, a selection message indicating that the second apparatus has been selected for involvement in the sidelink positioning session for the first apparatus. The third apparatus may be a positioning server UE that is responsible for the positioning method determination, assistant data distribution and/or location calculation functionalities for SL positioning and ranging based services. Alternatively, the first apparatus may be a location management function (LMF) e.g. forming part of a network entity.

The method 500 may further comprise means for participating in a positioning session with a fourth apparatus. The fourth apparatus may be in a sidelink positioning session with the first apparatus and may be a server UE or an LMF.

The method 500 may be performed by an apparatus such as the UE 100 of Fig. 1, e.g., a mobile phone or a smart phone, or by a control device configured to control the functioning thereof, when installed therein.

The solution proposed in methods 300, 400 and 500 leads to a significant reduction in the amount of communication required compared to previous known technique and leads to a reduction in signalling overhead.

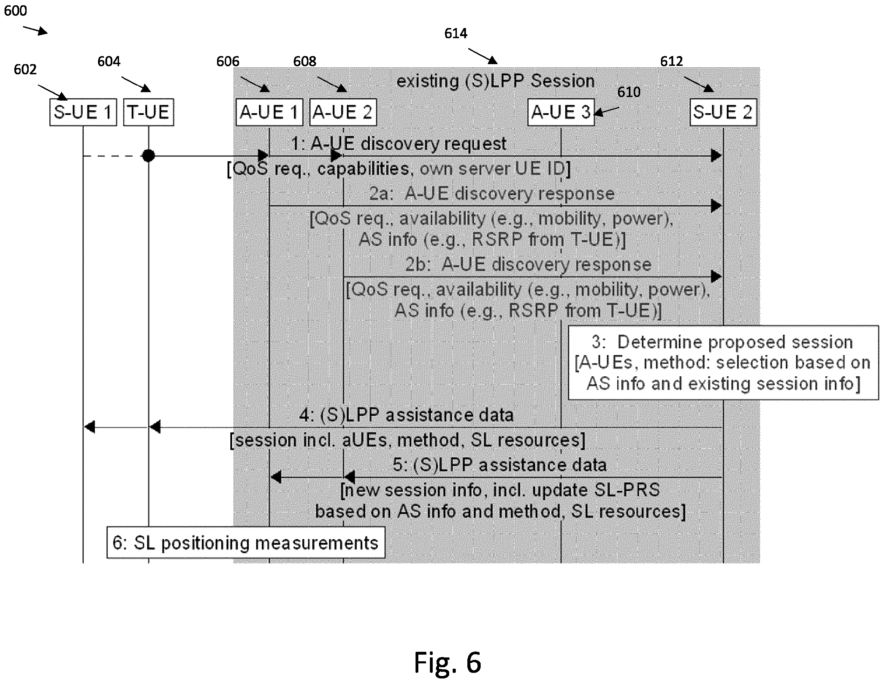

A process for message flow for sidelink session proposal based on an existing session is illustrated in the flow-chart of Fig. 6. Fig. 6 shows, by way of example, a flow chart of a message flow process according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

In the depicted example of Fig. 6, there is an existing (S)LPP session 614, which is managed by a server UE (S-UE 2) 612 and includes a set of anchor UEs (A-UEs) 606-610 (example of 3 A-UEs in Fig. 2). There is also a target UE (T-UE) 604, which is a UE whose position must be estimated, which does not belong to the (S)LPP session managed by S-UE 2. S-UE 2 may manage more than one (S)LPP sessions, which may involve different sets of A-UEs.

The process of message flow for the sidelink session proposal will be discussed according to steps 1-6 shown in Fig. 6.

At step 1, an A-UE 606-610 discovery message is sent. In an embodiment, the discovery message may be sent from the T-UE 604. Alternatively, in another embodiment, the discovery message may be sent from its server UE, i.e., S-UE 1 602 that the T-UE 604 is currently in a positioning session with. This embodiment could be useful in cases where the target UE is a UE with limited capabilities or limited power and by offloading this task to a server UE S-UE 1 602 it would save effort by the target UE. Also, assuming that the S-UE 1 602, as the managing entity, is the one who detects the need for discovery of anchors, the additional message needed to trigger the discovery request by the target UE is avoided.

In an embodiment, the discovery message may be broadcasted from the T-UE 604 such that it is received by all A-UEs within a certain distance from the T-UE 604. In this way the maximum number of available A-UEs will be reached, even those that may not yet be known to the S-UE 1 602 or S-UE 2 612. In an embodiment, the discovery message may include information related to quality of service requirements of the positioning service of the T-UE, such that an A-UE 606-610 that receives the quality-of-service requirement may be able to make an assessment of whether it is able to meet the quality of service required. In an embodiment, the discovery message may include an indication of the capabilities of the T-UE 604.

In a further embodiment, the discovery message may include the identity of S-UE 1 602, if the T-UE 604 is already in a SL positioning session managed by S-UE 1 602, which is not the same physical entity as the T-UE 604. This will indicate to all A-UEs 606-610 which receive the discovery message, the identity of the S-UE 1 602 for which the T-UE 604 is currently in a sidelink positioning session with. In a further embodiment, the T-UE 604 may indicate whether it can be its own server UE or it needs another UE to act as server UE during a new sidelink positioning session. This may help the S-UE 2 612 to determine it's own role in the sidelink positioning session.

In an embodiment, the discovery message may be sent from the T-UE 604 in a periodic manner such as by sending the discovery message at regular intervals. Alternatively, in another embodiment, the discovery message may be sent from the T_UE 604 in an aperiodic manner based on triggering event(s). For example, the sending of a discovery message may be triggered by a higher layer (e.g. an application layer) based on changes of UE's dynamics, such as position, speed, heading, etc., detected by UE's onboard sensor(s) such as IMU sensor(s), and/or triggered by a lower layer based on SL positioning measurements in the existing (S)LPP session with the S-UE 1 602, e.g., RSRP.)

At step 2 of Fig. 6, the A-UEs 606-610 which belong to an existing (S)LPP session 614 managed by the S-UE 2 612, after receiving the A-UE 606-610 discovery message, transmit an A-UE 606-610 discovery response message to S-UE 2 612. In the example shown in Fig. 6, A-UE 1 606 and A-UE 2 608 receive the A-UE discovery message from the T-UE 604, but A-UE 3 610 does not receive it. Therefore, only A-UE 1 606 and A-UE 2 608 transmit an A-UE 606, 608 discovery response message. In some embodiments, S-UE 2 612 may be an A-UE itself, in which case the transmission of an A-UE discovery response message is not needed.

In some embodiments, the A-UE 606, 608 which receives the A-UE discovery message, may decide to transmit or not the A-UE 606, 608 discovery response message, implicitly indicating its availability to participate in an (S)LPP session for estimating the position of the T-UE 604. In a further embodiment, the A-UE 606, 608 may transmit a discovery response message, which may include explicit information about its availability to support the positioning service of the T-UE 604. In a further embodiment, such explicit information may include the available power of the A-UE 606, 608 for transmitting SL PRS to support the positioning service of the T-UE 604, mobility information of the A-UE 606, 608 and any other useful information that the S-UE 2 612 or T-UE 604 may find helpful. In a further embodiment, the decision on whether or not to transmit the A-UE 606, 608 discovery response message is based on the access stratum (AS) information (e.g., RSRP) of the A-UE 606, 608 discovery message from the T-UE 604 and/or quality-of-service requirements contained in the A-UE 606, 608 discovery request from the T-UE 604.

In some embodiments, the A-UE 606, 610 discovery response message may include information about the link between the T-UE 604 and the A-UE 606, 608. In a further embodiment, such information may be access stratum (AS) information, which may be obtained via the reception of the A-UE 606, 610 discovery request sent from the T-UE 604. An example of such AS information is the reference signal received power (RSRP). A further example of information about the link between the T-UE 604 and the A-UE 606, 608 is relative velocity information between the T-UE 604 and the A-UE 606, 608.

In a further embodiment, the A-UE 606, 608 discovery response message may include the quality-of-service requirements of the positioning service, as indicated in the A-UE discovery message. In a further embodiment, an A-UE 606, 608 may receive A-UE 606, 608 discovery messages from multiple T-UEs 604 and may decide to respond to none, or to one or more than one of them. In case it responds to more than one of the requests, it may do so with a single A-UE 606, 608 discovery response message, including information related to the request. For example, the discovery response message may combine the A-UE discovery response messages to each of the T-UEs 604 in a single response.

In a further embodiment, an A-UE 606, 608 may be involved in multiple (S)LPP sessions managed by multiple S-UEs 602, 612. The A-UE 606, 608 may decide to forward it's A-UE 606, 608 discovery response message to one or more of the S-UEs 602, 612. In a further embodiment, the A-UE 606, 608 discovery response message may include "resource delta" information that the A-UE 606, 608 is capable to address the discovery message with respect to the existing (S)LPP session the A-UE 606, 608 is involved. In an example, the A-UE 606, 608 indicates to S-UE 2 612 the maximum additional SL PRS bandwidth it can provide on top of the currently allocated bandwidth. In another example, the A-UE 606, 608 indicates to S-UE 2 612 the maximum and/or minimum SL PRS periodicity and/or possible values of SL PRS periodicity in the form of absolute value(s) or relative value(s) with respect to the existing periodicity of an ongoing (S)LPP session. In a further embodiment, the A-UE 606, 608 may select the S-UE 602, 612 it will forward the discovery request based on the minimum "resource delta" information across the multiple concurrent (S)LPP sessions. In an example, the A-UE 606, 608 may select to communicate to the S-UE administering the (S)LPP session with the minimum additional required bandwidth to address the discovery request.

At step 2A in Fig. 6, the A-UE discovery response message is sent by A-UE 1 606. At step 2B in Fig. 6, the A-UE discovery response message is sent by A-UE 2 608. A-UE 2 608 may or may not be in a session managed by a server UE 612. A-UE 2 608 may provide a response to the discovery message in a similar manner to A-UE 1 606.

At step 3 of Fig. 6, after receiving the A-UE 606, 608 discovery response messages, S-UE 2 612 determines the proposed (S)LPP session for the T-UE 604. In some embodiments, S-UE 2 612 determines the SL positioning method to be used, the A-UEs 606, 608 to participate in the session and the server UE of the session. The A-UEs 606, 608 to participate in the session may be chosen as a subset of A-UEs 606, 608 participating in (S)LPP session(s) managed by S-UE 2 612 and having sent an A-UE discovery response message to the S-UE 2 612. The selection may be based on information provided in the A-UE discovery response messages and/or based on information from existing session(s), e.g., A-UE capabilities. In a further embodiment, the server UE of the proposed session may be S-UE 2 612, the T-UE 604 or one of the A-UEs 606, 608 participating in the proposed session. The S-UE 2 may configure a new sidelink positioning session for positioning the T-UE 604 or, alternatively, may add the T-UE 604 to an existing (S)LPP session as an additional target UE, if this (S)LPP session supports multiple target UEs.

At step 4 of Fig. 6, the S-UE 2 612 may optionally provide information about the proposed (S)LPP session as determined in the previous steps. In some embodiments, S-UE 2 612 provides the information about the proposed session to the T-UE 604. Alternatively, if the T-UE 604 has indicated a server UE identity in its discovery message, S-UE 2 612 provides the information about the proposed session to the indicated server UE, i.e., S-UE 1602. In some embodiments, the information may include assistance data for SL PRS transmission and/or measurement configuration. In a further embodiment, the information may include the indication of resources for SL PRS transmission. In some embodiments, the information may include indication of the server UE of the proposed session (e.g. S-UE 2 612), the A-UEs 606, 608 and related assistance information, e.g., SL PRS configuration of A-UEs 606, 608. In some embodiments, if the S-UE 2 612 received the A-UE discovery message in Step 1, the S-UE 2 612 may provide the information about the proposed session directly to the T-UE 604. Alternatively, if the S-UE 2 613 did not receive the A-UE discovery message, it may provide the information through an A-UE 606, 608. In a further embodiment, such A-UE 606, 608 may act as the server UE of the proposed session. The choice of the A-UE 606, 608, through which the information is provided to the T-UE 604, may depend on the information provided in the A-UE discovery response message.

In some embodiments, multiple S-UEs (not shown) may provide information about proposed sessions to the T-UE 604. The T-UE 604 may determine to use none, one or more of the proposals for its positioning task and potentially inform the S-UEs (not shown) about its decision. For example, the T-UE 604 may decide to perform session-less positioning and use assistance information about A-UEs 606, 608 belonging to multiple existing (S)LPP sessions to receive the SL PRS of such A-UEs 606, 608 and compute its position. In another example, the T-UE 604 may choose to combine two proposed (S)LPP sessions, acting as the server UE itself. In this instance, the T-UE 604 may become its own server UE for its new session. For example, after deciding that it will act as its own server, i.e., that it will manage the (new) positioning session for computing its position (e.g., including position computation), it may sent a discovery request to discover A-UEs that could support it. Anchor UEs around it that are already in a session managed by another server send the discovery response to their server. Then their server proposes a session to the target UE. If multiple such proposals arrive at the target UE from multiple servers (of existing sessions) the T-UE 604 may decide to combine these proposal to establish the new session.

In a further example, the T-UE 604 may choose one of the proposed sessions based on the time of establishment of the session on which the proposal is based, and/or based on one or more other condition(s) (possibly combined), for example based on the RSRP of the UEs suggesting the session, and/or based on the confidence of the potential accuracy provided.

In a further embodiment, the information about the proposed session may be based on the time-offset between the discovery message and discovery response message such that an outdated outcome information about the session is not delivered to T-UE 604 (and/or S-UE 1602).

At step 5 of Fig. 6, the S-UE 1 612 may optionally provide information, i.e., assistance data, related to the proposed session to the participating A-UEs. The S-UE 1 612 may provide an updated SL PRS configuration to the A-UEs participating in the proposed session. This update may be at least based on the quality-of-service requirement of the positioning service of the T-UE 604, the information provided in the A-UE 606, 608 discovery response messages and the proposed method. In a further embodiment, if the proposed positioning method requires SL PRS transmission(s) from the T-UE 604, the S-UE 1 612 provides the relevant measurement configuration to the A-UEs.

In Step 6 of Fig. 6 SL PRSs are transmitted from the A-UEs and measured by T-UE and/or transmitted from the T-UE and measured by the A-UEs, according at least to the information provided in Step 4 and Step 5.

In some embodiments, any of the embodiment(s) described in this document could be performed only if the number of existing (S)LPP session(s) is higher than a threshold. The advantage of this is that it avoids proposing sessions that are less likely to be useful to the target UE (because of having few A-UEs which may become unreliable). The number of existing (S)LPP session(s) may relate to the T-UE(s) and/or A-UEs and/or S-UEs. In one example, the T-UE and/or A-UE and/or S-UE may perform any of the embodiment(s) in this document only if the number of T-UE and/or A-UE and/or S-UE available (any combination of UE type is possible) or involved in (S)LPP session(s), is higher than a threshold. In one example, the T-UE may perform any of the embodiment(s) only if the number of A-UEs belonging to (S)LPP sessions is two or higher (as an example). In another example, the S-UE may perform any of the embodiment(s) only if the number of A-UEs belonging to (S)LPP sessions is two or higher (as an example). In another example, the A-UE may perform any of the embodiment(s) only if the number of A-UEs is higher than a threshold (for example, two or more). In another example, any embodiment may apply only if the number of S-UE(s) involved is higher than a threshold. For example, for Step 2 of Fig. 6, the A-UEs send the response to (multiple) S-UEs if there are multiple S-UEs. In another example, any embodiment may apply only if the number of T-UE(s) involved is higher than a threshold. For example, Step 2B of Fig. 6 may apply only if the number of T-UE(s) involved is higher than three.

While the examples disclosed herein may relate to 3GPP NR, other radio access technologies can use the ideas in this document, for example LTE or 6G. While the examples in this document relate to 3GPP, ideas in this document could be used for non-3GPP technologies, for example IEEE and its 802.11 variants, wifi, wimax, etc.

The proposed configuration means that there is no need for A-UEs capability exchange and as such it reduces the amount of communication required and leads to a reduced signalling overhead. Also, there is no need to provide assistance data to A-UEs, such as when no update of the SL PRS transmission/measurement configuration is needed for the A-UEs. The configuration disclosed herein is especially beneficial when involved in multiple sessions, SUE can easily find and downselect A-UEs appropriate for the new session. This leads to a significant reduction of signalling overhead and latency. The T-UE receives a proposed session with minimum signalling and computational overhead which is useful for UEs with low capabilities.

### Example Apparatus

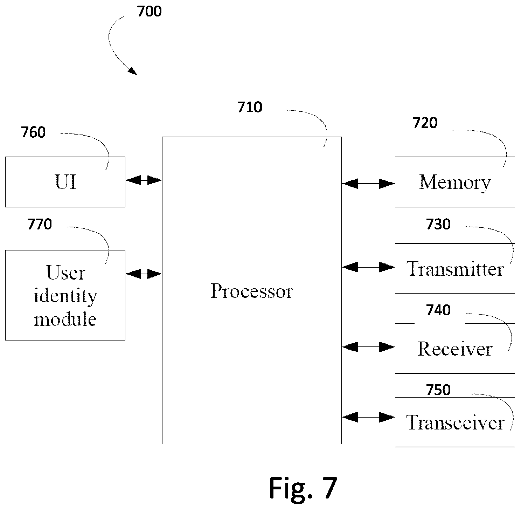

Fig. 7 shows, by way of example, a block diagram of an apparatus capable of performing the method(s) as disclosed herein. Illustrated is device 700, which may comprise, for example, a mobile communication device such as mobile device 100 of Fig. 1. Comprised in device 700 is processor 710, which may comprise, for example, a single- or multi-core processor wherein a single-core processor comprises one processing core and a multi-core processor comprises more than one processing core. Processor 710 may comprise, in general, a control device. Processor 710 may comprise more than one processor. Processor 710 may be a control device. A processing core may comprise any known processor available in the market.. Processor 710 may comprise at least one application-specific integrated circuit, ASIC. Processor 710 may comprise at least one field-programmable gate array, FPGA. Processor 710 may be means for performing method steps in device 700. Processor 710 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 700 may comprise memory 720. Memory 720 may comprise random-access memory and/or permanent memory. Memory 720 may comprise at least one RAM chip. Memory 720 may comprise solid-state, magnetic, optical and/or holographic memory, for example. Memory 720 may be at least in part accessible to processor 710. Memory 720 may be at least in part comprised in processor 710. Memory 720 may be means for storing information. Memory 720 may comprise computer instructions that processor 710 is configured to execute. When computer instructions configured to cause processor 710 to perform certain actions are stored in memory 720, and device 700 overall is configured to run under the direction of processor 710 using instructions, e.g. computer instructions, from memory 720, processor 710 and/or its at least one processing core may be considered to be configured to perform said certain actions. Memory 720 may be at least in part external to device 700 but accessible to device 700.

Device 700 may comprise a transmitter 730. Device 700 may comprise a receiver 740. Transmitter 730 and receiver 740 may be configured to transmit and receive, respectively, information in accordance with at least one cellular or non-cellular standard. Transmitter 730 may comprise more than one transmitter. Receiver 740 may comprise more than one receiver. Transmitter 730 and/or receiver 740 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 700 may comprise a near-field communication, NFC, transceiver 750. NFC transceiver 750 may support at least one NFC technology, such as NFC, Bluetooth, Wibree or similar technologies.

Device 700 may comprise user interface, UI, 760. UI 760 may comprise at least one of a display, a keyboard, a touchscreen, a vibrator arranged to signal to a user by causing device 700 to vibrate, a speaker and a microphone. A user may be able to operate device 700 via UI 760, for example to accept incoming telephone calls, to originate telephone calls or video calls, to browse the Internet, to manage digital files stored in memory 720 or on a cloud accessible via transmitter 730 and receiver 740, or via NFC transceiver 750, and/or to play games.

Device 700 may comprise or be arranged to accept a user identity module 770. User identity module 770 may comprise, for example, a subscriber identity module, SIM, card installable in device 700. A user identity module 770 may comprise information identifying a subscription of a user of device 700. A user identity module 770 may comprise cryptographic information usable to verify the identity of a user of device 700 and/or to facilitate encryption of communicated information and billing of the user of device 700 for communication effected via device 700.

Processor 710 may be furnished with a transmitter arranged to output information from processor 710, via electrical leads internal to device 700, to other devices comprised in device 700. Such a transmitter may comprise a serial bus transmitter arranged to, for example, output information via at least one electrical lead to memory 720 for storage therein. Alternatively to a serial bus, the transmitter may comprise a parallel bus transmitter. Likewise processor 710 may comprise a receiver arranged to receive information in processor 710, via electrical leads internal to device 700, from other devices comprised in device 700. Such a receiver may comprise a serial bus receiver arranged to, for example, receive information via at least one electrical lead from receiver 740 for processing in processor 710. Alternatively to a serial bus, the receiver may comprise a parallel bus receiver.

Processor 710, memory 720, transmitter 730, receiver 740, NFC transceiver 750, UI 760 and/or user identity module 770 may be interconnected by electrical leads internal to device 700 in a multitude of different ways. For example, each of the aforementioned devices may be separately connected to a master bus internal to device 700, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:
means for maintaining capability information for a first sidelink positioning session supported by a second apparatus;
means for receiving, at the apparatus from the second apparatus, a response message, the response message being a response to a discovery message, and the discovery message being a request for a second sidelink positioning session for positioning a third apparatus;
means for determining that the second apparatus is available for supporting the second sidelink positioning session;
means for transmitting, from the first apparatus, a selection message indicating that the second apparatus has been selected for involvement in the second sidelink positioning session.

2. The apparatus of claim 1, wherein the response message comprises status information regarding the availability of the second apparatus for supporting the second sidelink positioning session, the status information comprising at least one of:
access stratum information;
power available to transmit sidelink positioning signals;
quality of service information; or
mobility information.

3. The apparatus of claim 2, wherein the means for determining that the second apparatus is available for supporting the second sidelink positioning session, is based on the status information received in the response message.

4. The apparatus of any preceding claim, wherein the means for determining that the second apparatus is available for supporting the second sidelink positioning session, is based on capability information regarding the second apparatus maintained by the apparatus.

5. The apparatus of any preceding claim, wherein the selection message further comprises assistance data for the second sidelink positioning session, the assistance data comprising a sidelink positioning session configuration for the second apparatus and the third apparatus based on at least one of: a quality-of-service requirement of the third apparatus or information provided in the response message.

6. The apparatus of any preceding claim, further comprising means for performing at least one of:
configuring a new sidelink positioning session for positioning the third apparatus supported by the apparatus; or
incorporating the third apparatus into an existing sidelink positioning session that is supported by the apparatus.

7. An apparatus, comprising:
means for participating in a positioning session with a second apparatus;
means for receiving, at the apparatus from a third apparatus, a discovery message for a request for a sidelink positioning session to support the positioning of the third apparatus;
means for transmitting, from the apparatus to the second apparatus, a response message to the discovery message.

8. The apparatus of claim 7, further comprising means for receiving, at the apparatus from the second apparatus, a selection message indicating that the apparatus has been selected for involvement in the sidelink positioning session for the third apparatus.

9. The apparatus of claims 7 or 8, further comprising means for:
determining whether to transmit the response message based on status information regarding the availability of the apparatus for supporting the sidelink positioning session of the third apparatus, the status information comprising at least one of:
access stratum information;
power available to transmit sidelink positioning signals;
quality of service information; or
mobility information;
wherein the response message comprises the status information.

10. An apparatus, comprising:
means for transmitting, from the apparatus to a second apparatus, a discovery message for a request for a sidelink positioning session to support the positioning of the apparatus;
means for receiving, from a third apparatus at the apparatus, a selection message indicating that the second apparatus has been selected for involvement in the sidelink positioning session for the apparatus.

11. The apparatus of any of claims 1 to 10, wherein the discovery message is a broadcast signal and/or wherein the discovery message comprises an indication of the capabilities of the third apparatus.

12. The apparatus of any of claims 1 to 11, wherein at least one apparatus comprises a user equipment.

13. A method, comprising:
at a first apparatus, maintaining capability information for a first sidelink positioning session supported by a second apparatus;
receiving, at the first apparatus from the second apparatus, a response message, the response message being a response to a discovery message, and the discovery message being a request for a second sidelink positioning session for positioning a third apparatus;
determining that the second apparatus is available for supporting the second sidelink positioning session;
transmitting, from the first apparatus, a selection message indicating that the second apparatus has been selected for involvement in the second sidelink positioning session.

14. A method, comprising:
participating, by a first apparatus, in a positioning session with a second apparatus;
receiving, at the first apparatus from a third apparatus, a discovery message for a request for a sidelink positioning session to support the positioning of the third apparatus;
transmitting, from the first apparatus to the second apparatus, a response message to the discovery message.

15. A method, comprising:
transmitting, from a first apparatus to a second apparatus, a discovery message for a request for a sidelink positioning session to support the positioning of the first apparatus;
receiving, from a third apparatus at the first apparatus, a selection message indicating that the second apparatus has been selected for involvement in the sidelink positioning session for the apparatus.
